# EUROPEAN PATENT SPECIFICATION

(11) **EP 0 286 259 B1**
(45) Date of publication and mention of the grant of the patent: **25.01.1995**
(21) Application number: 88302421.8
(22) Date of filing: 18.03.1988
(51) Int. Cl.: F17D 1/00, F17D 3/18, G01F 15/08

(54) **Multi-phase petroleum stream monitoring system**
Vorrichtung zum Überwachen eines Multiphasen-Erdölstromes
Système pour surveiller un écoulement de pétrole multiphase

(30) Priority: 10.04.1987 US 36951
(43) Date of publication of application: 12.10.1988
(73) Proprietor: TEXACO DEVELOPMENT CORPORATION, White Plains, New York 10650 (US)
(72) Inventor: Hatton, Gregory John, Houston Texas 77035 (US)
(74) Representative: Wood, Anthony Charles

(56) References cited:
- FR-A- 2 134 873
- FR-A- 2 401 379
- GB-A- 931 735
- GB-A- 1 208 121
- GB-A- 2 089 049
- GB-A- 2 180 352
- US-A- 1 467 512

## Description

The present invention relates to monitoring systems for a multi-phase petroleum stream.

US-A-1467512 describes a system for monitoring a multi-phase petroleum stream flowing in a pipeline, comprising:
a stratifying pipe connected to an upstream section (4) of the pipeline and inclined downwardly to tend to cause statification of the petroleum stream into a predominantly gaseous stream and a predominantly liquid stream by causing the stream to flow down the incline;
liquid discharge means connected to a downstream section of the pipeline for allowing liquid from the stratifying pipe to flow into the downstream section of the pipeline;
an accumulator connected by connecting pipes to the upper side wall of the stratifying pipe for accumulating gas from the stratifying pipe; and
gas discharge means connected to the accumulator for allowing gas to discharge from the accumulator.

The present invention is characterized as set out in claim 1.

GB-A-2089049 describes the separation of a dual-phase mixed fluid into gaseous and liquid phases, and separately measuring their flow rates, followed by re-mixing of the separated fluids prior to discharge.

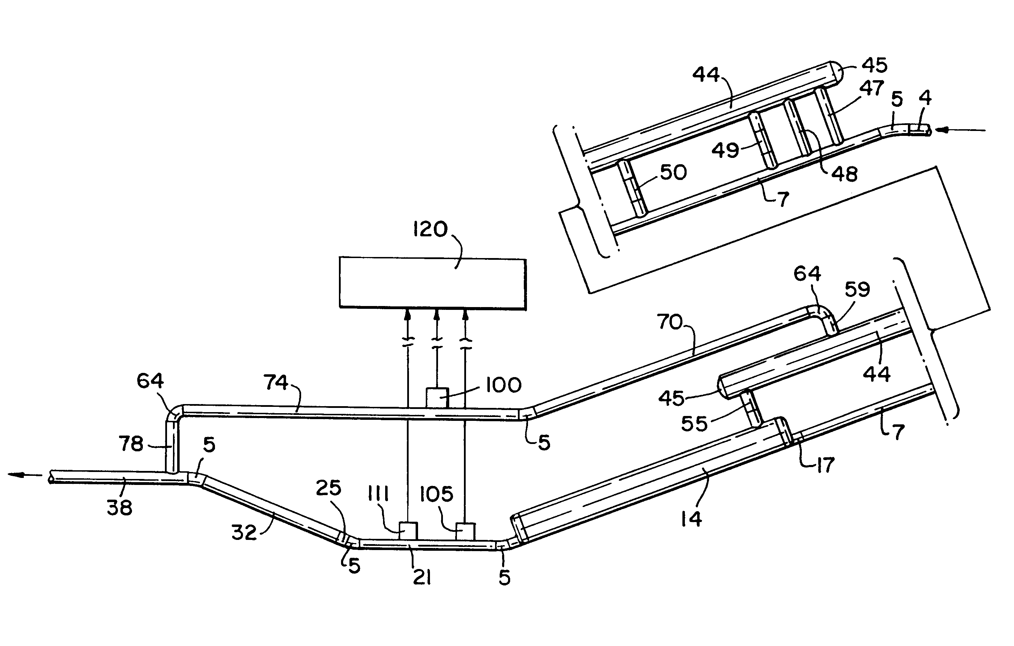

An embodiment of the present invention will now be described, by way of example, with reference to the accompanying drawing which is a partial schematic and partial simplified block diagram of a multi-phase monitoring system according to the invention.

With reference to the Figure, a multi-phase petroleum production stream is flowing in a sub-sea pipe 4. Pipe 4 nominally in this example is a 10 cm. diameter pipe. Petroleum stream from pipe 4 is fed into another pipe 7 which is also 10 cm. diameter, but it is inclined downwardly at a predetermined angle to the horizontal in the range of from 10° to 80°. It should be noted that all angles are with reference to the horizontal and can be the same but it is not necessary that the angles actually be the same. In the present example, a preferred angle of 22.5 degrees is used. Pipe 7 is connected to a 25 cm. diameter pipe 14 with a suitable coupling 17. Pipe 14 functions as a gas trap. The end of pipe 14 is connected to a 7.6 cm. diameter pipe 21 through coupling 5 and pipe 21 extends in the horizontal plane. Pipe 21 is connected by another coupling 5 to a two diameter adapter coupling 25, which in turn is connected to a 10 cm. diameter pipe 32. Pipe 32 is connected to pipeline 38 by a coupling 5 and pipeline 38 extends in the horizontal plane, but is not at the same level as the entry pipeline 4.

A gas accumulator pipe 44 is connected to pipe 7 by connecting pipes 47 through 50. As can be seen in the Figure, connecting pipes 47, 48 and 49 are relatively close together, while connecting pipe 50 is spaced further apart. A connecting pipe 55 connects pipe 14 to accumulator pipe 44 in a manner so that connecting pipe 55 is located near the upper end of pipe 14. It should be noted that pipe 44 extends above and substantially parallel to the longitudinal axis of pipes 7 and 14.

Accumulator pipe 44 has a pipe 59 which is connected to a 90° elbow 64 which in turn is connected to a 10 cm. diameter pipe 70. Again, due to the 90° fitting 64 and the fact that the outlet fitting 59 is perpendicular to the longitudinal axis of pipe 44, the longitudinal axis of pipe 70 is substantially parallel to the axis of pipe 44 and of pipes 14 and 7.

Pipe 70 is connected to another 10 cm. diameter pipe 74 by coupling 5 so that the longitudinal axis of pipe 74 is substantially horizontal. Pipe 74 is connected to a 90° elbow 64 which in turn is connected to a pipe 78, which has entry into pipeline 38. As an indication of physical size, the length of the inclined pipeline 7 and 14 carrying liquid is approximately 7.6 metres. The gas accumulator pipe 44 is approximately 5.2 metres in length. The inclined portion of the gas pipe 70 is approximately 1.5 metres in length, while the horizontal portion is approximately 3.2 metres. All angles used in the foregoing example are 22.5°, but as noted before, the angle can lie in the range from 10° to 80°.

A conventional gas flow meter 100 provides a signal corresponding to the gas flow rate, while a conventional liquid flow meter 105 provides a signal representative of the liquid flow rate. A percentage water content meter 111, which may be of a conventional capacitive type, provides a signal corresponding to the percentage water content of the liquid flowing in pipe 21. The signals from meters 100, 105 and 111 are provided to a console and recording equipment 120 on an offshore platform (not shown) for review and recordation.

In operation, a multi-phase petroleum stream in pipe 4 flows down through pipes 7 and 14 with the assistance of gravity. Due to the downward inclination of the pipe and turbulence in the flowing stream, gas starts breaking free from the liquid and rises to the upper side of pipes 7 and 14 and then enters accumulator 44 by way of the connecting pipes 47 to 50 and connecting pipe 55. The liquid continues down through pipe 7 still yielding gas, to where it reaches pipe 21. Due to the reduced diameter of pipe 21 and the fact that it is horizontal, liquid backs up in the pipe 14, further facilitating gas to accumulate in the upper portion of pipe 14. The trapped gas enters accumulator pipe 44 via the connecting pipe 55 so that the fluid flowing through pipe 21 is substantially all liquid. As the gas builds up in accumulator 44 it forces gas to discharge through pipe 70 which then feeds through pipe 74 and then down to pipe 78 and back into the petroleum stream through discharge pipe 38.

The invention as hereinbefore described is a system for monitoring the gas flow rate, the liquid flow rate and the percentage water content of a multi-phase petroleum stream.

## Claims

1. A system for monitoring a multi-phase petroleum stream flowing in a pipeline, comprising:
a stratifying pipe (7) connected to an upstream section (4) of the pipeline and inclined downwardly to tend to cause stratification of the petroleum stream into a predominantly gaseous stream and a predominantly liquid stream by causing the stream to flow down the incline;
liquid discharge means (21,32) connected to a downstream section (38) of the pipeline for allowing liquid from the stratifying pipe to flow into the downstream section of the pipeline;
an accumulator (44) connected by connecting pipes (47-50) to the upper side wall of the stratifying pipe (7) for accumulating gas from the stratifying pipe; and
gas discharge means (70,74) connected to the accumulator for allowing gas to discharge from the accumulator;
characterized by:
an elongate gas trap (14) connected between said stratifying pipe (7) and said liquid discharge means (21,32), said gas trap being of larger diameter than said stratifying pipe and being inclined downwardly from said stratifying pipe to said liquid discharge means;
a connecting pipe (55) between the upper end portion of said gas trap (14) and said accumulator (44) to allow gas also to flow from said gas trap into said accumulator;
said liquid discharge means (21,32) includes a first pipe and a second pipe, said first pipe (21) being arranged in a horizontal position and connected to the lower end portion of said gas trap (14) and whose diameter is less than the diameter of the stratifying pipe (7) whereby to cause liquid to back up in said gas trap to facilitate gas to accumulate in said upper end portion of said gas trap, and said second pipe (32) connecting the first pipe (21) to the downstream section (38) of the pipeline and having the same diameter as the pipeline;
said gas discharge means (70,74) being connected to the accumulator and to the downstream section (38) of the pipeline to allow gas to discharge from the accumulator into the downstream section of the pipeline so as to recombine the petroleum stream;
a first flow meter (100) connected to the gas discharge means (70,74) for providing a signal representative of the gas flow rate;
a second flow meter (105) connected to the first horizontal pipe (21) of the liquid discharge means for providing a signal representative of the liquid flow rate; and
means (111) also connected to the first horizontal pipe (21) of the liquid discharge means for providing a signal representative of the percentage water content of the liquid.

2. A system according to claim 1 characterized in that the incline provided by said stratifying pipe (7) lies in the range of from 10° to 80° to the horizontal.

3. A system according to claim 1 or claim 2 characterized in that the gas trap (14) is a length of pipe of substantially greater diameter than the stratifying pipe (7).

4. A system according to any one of claims 1 to 3 characterized in that the accumulator (44) is connected to the stratifying means (7) and to the gas trap (14) by a series of pipes (47-50) which are slightly smaller in diameter than the stratifying pipe (7).

5. A system according to any one of claims 1 to 4 characterized in that the accumulator (44) comprises a pipe greater in diameter than the stratifying pipe (7) but lesser in diameter than the gas trap (14).

6. A system according to any one of claims 1 to 5 in which the gas discharge means (70,74) includes a first length of pipe (70) connected to the accumulator pipe (44) and having the same diameter as the pipeline, and a second length of pipe (74) arranged in a horizontal position and connected to the first length of pipe (70) and to the downstream section (38) of the pipeline.

## Patentansprüche

1. System zum Überwachen eines in einer Rohrleitung strömenden, mehrphasigen Erdölstroms mit:
einer Schichtungsleitung (7), die an einen stromauf gelegenen Abschnitt (4) der Pipeline angeschlossen ist und nach unten geneigt ist, um tendenziell eine Schichtung des Erdölstroms in einen vorwiegend gasförmigen Strom und einen vorwiegend flüssigen Strom zu bewirken, indem der Strom dazu gebracht wird, entlang der Neigung abzufließen;
einer Flüssigkeitsabflußeinrichtung (21, 32), die mit einem stromab befindlichen Abschnitt (38) der Pipeline verbunden ist, um zu ermöglichen, daß Flüssigkeit aus der Schichtungsleitung in den stromab befindlichen Abschnitt der Pipeline fließen kann;
einem Sammelbehälter (44), der über Verbindungsleitungen (47 bis 50) mit der oberen Seitenwand der Schichtungsleitung (7) verbunden ist, um Gas aus der Schichtungsleitung anzusammeln; und
einer Gasabzugseinrichtung (70, 74), die mit dem Sammelbehälter verbunden ist, um das Abziehen von Gas aus dem Sammelbehälter zu ermöglichen;
gekennzeichnet durch:
einen länglichen Gasabscheider (14), der zwischen der besagten Schichtungsleitung (7) und der besagten Flüssigkeitsabflußeinrichtung (21, 32) angeschlossen ist, wobei der besagte Gasabscheider einen größeren Durchmesser hat als die besagte Schichtungsrleitung und von der besagten Schichtungsleitung zu der besagten Flüssigkeitsabflußeinrichtung abwärts geneigt ist;
ein Verbindungsrohr (55) zwischen dem oberen Endabschnitt des besagten Gasabscheiders (14) und dem besagten Sammelbehälter (44), um zu ermöglichen, daß Gas auch von dem besagten Gasabscheider in den besagten Sammelbehälter strömen kann;
wobei die besagte Flüssigkeitsabflußeinrichtung (21, 32) eine erste und eine zweite Leitung einschließt, wobei die besagte erste Leitung (21) in horizontaler Stellung angeordnet ist und mit dem unteren Endabschnite des besagten Gasabscheiders (14) verbunden ist und deren Durchmesser kleiner ist als der Durchmesser der Schichtungsleitung (7), wodurch ein Aufstauen von Flüssigkeit im besagten Gasabscheider veranlaßt wird, um zu erleichtern, daß sich Gas im besagten oberen Endabschnitt des besagten Gasabscheiders ansammelt, und wobei die besagte zweite Leitung (34) die erste Leitung (21) mit dem stromab gelegenen Abschnitt (38) der Pipeline verbindet und den gleichen Durchmesser wie die Pipeline hat;
wobei die besagte Gasabzugseinrichtung (70, 74) mit dem Sammelbehälter und dem stromab gelegenen Abschnitt (38) der Pipeline verbunden ist, um zu ermöglichen, daß Gas aus dem Sammelbehälter in den stromab gelegenen Abschnitt der Pipeline abströmt, um den Erdölstrom wieder zu vereinigen;
ein erstes Durchflußmeßgerät (100), das an die Gasabzugseinrichtung (70, 74) angeschlossen ist, um ein Signal zu erzeugen, das für die Gasdurchflußmenge repräsentativ ist;
ein zweites Durchflußmeßgerät (105), das mit der ersten horizontalen Leitung (21) der Flüssigkeitsabflußeinrichtung verbunden ist, um ein Signal zu erzeugen, das für die Flüssigkeitsdurchflußmenge repräsentativ ist; und
eine Einrichtung (111), die ebenfalls mit der ersten horizontalen Leitung (21) der Flüssigkeitsabflußeinrichtung verbunden ist, um ein Signal zu liefern, das für den anteiligen Wassergehalt der Flussigkeit repräsentativ ist.

2. System nach Anspruch 1, dadurch gekennzeichnet, daß die Neigung der besagten Schichtungsleitung (7) im Bereich von 10° bis 80° gegenüber der Horizontalen liegt.

3. System nach Anspruch 1 oder 2, dadurch gekennzeichnet, daß der Gasabscheider (14) aus einem Rohrabschnitt wesentlich größeren Durchmessers als die Schichtungsleitung (7) besteht.

4. System nach einem der Ansprüche 1 bis 3, dadurch gekennzeichnet, daß der Sammelbehälter (44) mit der Schichtungseinrichtung (7) und dem Gasabscheider (14) durch eine Reihe von Leitungen (47 bis 50) verbunden ist, die einen geringfügig kleineren Durchmesser als die Schichtungsleitung (7) aufweisen.

5. System nach einem der Ansprüche 1 bis 4, dadurch gekennzeichnet, daß der Sammelbehälter (44) aus einem Rohr besteht, daß ein größeren Durchmesser als die Schichtungsleitung (7), aber einen kleineren Durchmesser als der Gasabscheider (14) aufweist.

6. System nach einem der Ansprüche 1 bis 5, dadurch gekennzeichnet, daß die Gasabzugseinrichtung (70, 74) einen ersten Rohrabschnitt (70) aufweist, der mit dem Sammelrohr (44) verbunden ist und den gleichen Durchmesser wie die Pipeline hat, und einen zweiten Rohrabschnitt (74), der in horizontaler Position angeordnet und mit dem ersten Rohrabschnitt (70) sowie mit dem stromab gelegenen Abschnitt (38) der Pipeline verbunden ist.

## Revendications

1. Système pour surveiller un écoulement de pétrole multiphase circulant dans un pipe-line, comprenant :
une canalisation de stratification (7) connectée à une section amont (4) du pipe-line et inclinée vers le bas pour réaliser, par entraînement de l'écoulement selon l'inclinaison descendante, une stratification de l'écoulement de pétrole en un écoulement à prédominance gazeuse et un écoulement à prédominance liquide ;
un moyen d'évacuation de liquide (21, 32) connecté à une section aval (38) du pipe-line pour permettre au liquide venant de la canalisation de stratification de circuler dans la section aval du pipe-line ;
un collecteur (44) connecté par des conduits de connexion (47-50) à la paroi latérale supérieure de la canalisation de stratification (7) pour collecter le gaz venant de la canalisation de stratification ; et
un moyen d'évacuation de gaz (70,74) connecté au collecteur pour permettre au gaz de s'évacuer du collecteur ;
caractérisé par :
un piège à gaz de forme allongée (14) connecté entre ladite canalisation de stratification (7) et ledit moyen d'évacuation de liquide (21, 32), ledit piège à gaz étant de diamètre plus grand que ladite canalisation de stratification et étant incliné vers le bas à partir de ladite canalisation de stratification vers ledit moyen d'évacuation de liquide ;
un conduit de connexion (55) entre la partie d'extrémité supérieure dudit piège à gaz (14) et ledit collecteur (44) pour permettre au gaz de circuler également à partir dudit piège à gaz vers ledit collecteur ;
ledit moyen d'évacuation de liquide (21, 32) incluant un premier tuyau et un second tuyau, ledit premier tuyau (21) étant disposé dans une position horizontale et connecté à la partie d'extrémité inférieure du piège à gaz (14), son diamètre étant inférieur au diamètre de la canalisation de stratification (7) de façon à entrainer le liquide à remonter en retour dans ledit piège à gaz pour faciliter l'accumulation du gaz dans ladite partie d'extrémité supérieure dudit piège à gaz et ledit second tuyau (32) connectant le premier tuyau (21) à la section aval (38) du pipeline et ayant le même diamètre que le pipeline ;
ledit moyen d'évacuation de gaz (70,74) étant connecté au collecteur et à la section aval (38) du pipeline pour permettre au gaz de s'évacuer du collecteur vers la section aval du pipe-line de façon à se recombiner avec l'écoulement de pétrole ;
un premier débitmètre (100) connecté au moyen d'évacuation de gaz (70, 74) pour fournir un signal représentatif du débit de gaz ;
un second débit mètre (105) connecté au premier tuyau horizontal (21) du moyen d'évacuation de liquide pour fournir un signal représentatif du débit de liquide ; et
un moyen (111) également connecté au premier tuyau horizontal (21) du moyen d'évacuation de liquide pour fournir un signal représentatif de la teneur en eau, en pour-cent, du liquide.

2. Système selon la revendication 1, caractérisé en ce que l'inclinaison de ladite canalisation de stratification (7) se situe dans la gamme allant de 10° à 80° par rapport à l'horizontale.

3. Système selon la revendication 1 ou 2, caractérisé en ce que le piège à gaz (14) est une portion de tuyau de diamètre sensiblement plus grand que la canalisation de stratification (7).

4. Système selon l'une quelconque des revendications 1 à 3 , caractérisé en ce que le collecteur (44) est connecté au moyen de stratification (7) et au piège à gaz (14) par une série de conduits (47-50) qui sont de diamètre légèrement plus petit que le diamètre de la canalisation de stratification (7).

5. Système selon l'une quelconque des revendications 1 à 4, caractérisé en ce que le collecteur (44) comprend un tuyau de diamètre plus grand que le diamètre de la canalisation de stratification (7) mais de diamètre inférieur à celui du piège à gaz (14).

6. Système selon l'une quelconque des revendications 1 à 5 dans lequel le moyen d'évacuation du gaz (70, 74) inclut une première portion de tuyau (70) connectée au tuyau collecteur (44) et ayant le même diamètre que le pipe-line et une seconde portion de tuyau (74) disposée dans une position horizontale et connectée à la première portion de tuyau (70) et à la section aval (38) du pipe-line.
